# EUROPÄISCHE PATENTSCHRIFT

(11) **EP 2 998 441 B1**
(45) Veröffentlichungstag und Bekanntmachung des Hinweises auf die Patenterteilung: **09.11.2016**
(21) Anmeldenummer: 14185175.8
(22) Anmeldetag: 17.09.2014
(51) Int. Cl.: E01C 19/48, E01C 19/40

(54) **Bedienstand für einen Straßenfertiger mit einer Trittvorrichtung mit Verriegelungseinrichtung**
Operator stand for a road finisher with a platform with locking system
Poste de commande d'une finisseuse de route doté d'une passerelle avec système de verrouillage

(43) Veröffentlichungstag der Anmeldung: 23.03.2016
(73) Patentinhaber: Joseph Vögele AG, 67075 Ludwigshafen (DE)
(72) Erfinder: Erdtmann, Bernhard, 68309 Mannheim (DE)
(74) Vertreter: Grünecker Patent- und Rechtsanwälte PartG mbB

(56) Entgegenhaltungen:
- EP-A2- 0 939 165
- DE-U1- 20 001 798

## Beschreibung

Die Erfindung betrifft einen Bedienstand für einen Straßenfertiger mit einer Trittvorrichtung zum Bereitstellen eines Standplatzes für eine Person.

Typischerweise wird eine Einbaubohle an Zugholmen aufgehängt in Fahrtrichtung hinter einem Straßenfertiger hergezogen, um den frischen Fahrbahnbelag zu verdichten und zu glätten. Einbaubohlen weisen für gewöhnlich eine Verdichterleiste (Tamperleiste) mit einstellbarer Vibrationsfrequenz und einstellbarem Hub auf. Zudem kann an einer Einbaubohle ein Glättblech angebracht sein, um den frischen Fahrbahnbelag, beispielsweise bituminöses Einbaugut, abschließend zu glätten. Die Beschaffenheit und Qualität eines eingebauten Fahrbahnbelags hängt dabei von einer Reihe von Einbauparametern wie z.B. der Einbaugeschwindigkeit, der Tamperfrequenz, dem Tamperhub und dem Anstellwinkel der Einbaubohle ab.

Um die gewünschte Einbauqualität zu erreichen, können diese und andere Parameter eines Straßenfertigers während des Einbauvorgangs über entsprechende Einstelleinrichtungen angepasst werden. Dabei ist es vorteilhaft, wenn eine Bedienperson eine möglichst gute Sicht auf den bereits eingebauten Fahrbahnbelag und vorzugsweise auch auf den Arbeitsvorgang der Einbaubohle hat.

Das kann beispielsweise dadurch ermöglicht werden, dass ein Bedienstand mit Einstelleinrichtungen über oder hinter der Einbaubohle des Straßenfertigers vorgesehen ist, sodass eine Bedienperson an dem Bedienstand einen guten Überblick über den momentanen Arbeitszustand erhalten kann. Eine solche Anordnung macht es nun erforderlich, einen geeigneten Arbeitsplatz für eine Bedienperson, insbesondere einen Standplatz, auf dem Bedienstand bereitzustellen.

Aus der EP 2 366 832 A1 ist eine Einbaubohle für einen Straßenfertiger mit einem Außensteuerstand bekannt, wobei an der in Fahrtrichtung der Straßenfertigers hinten gelegenen Seite der Einbaubohle eine horizontale Trittfläche angebracht ist, auf der eine Person beim Bedienen der Einstelleinrichtungen stehen kann ohne mit dem frischen Einbaumaterial in Kontakt zu kommen.

Eine solche Trittfläche ermöglicht es während des Arbeitsvorgangs einer Bedienperson, an einer Einbaubohle angebrachte Einstelleinrichtungen ohne Probleme zu bedienen und einen guten Überblick über die aktuelle Einbausituation zu erhalten, kann sich beim Transport der Einbaubohle aber als störend erweisen.

Aus diesem Grund kann es vorteilhaft sein, wenn die Trittfläche zwischen einer horizontalen Nutzposition und einer vertikalen Transportposition verschwenkbar ist. Dazu kann die Trittfläche aus der horizontalen Position nach oben in Richtung auf die Einbaubohle zu geschwenkt werden, wenn sie momentan nicht benötigt wird.

Diese Schwenkbarkeit behebt zwar einige Nachteile der Trittfläche bezüglich der Transportierbarkeit der Einbaubohle des Straßenfertigers, macht aber auch den Standplatz für die Bedienperson instabiler.

An einer Einbaubohle vorgesehene abklappbare Trittflächen sind aus der DE 200 01 798 U1 und der EP 0 939 165 A2 bekannt.

Es ist Aufgabe der Erfindung, einen Bedienstand für einen Straßenfertiger mit einer Trittvorrichtung in Bezug auf Transportierbarkeit und Arbeitssicherheit zu verbessern.

Diese Aufgabe wird durch einen Bedienstand für einen Straßenfertiger gemäß Anspruch 1 gelöst. Die abhängigen Ansprüche geben vorteilhafte Ausführungsformen der Erfindung an.

Der erfindungsgemäße Bedienstand für einen Straßenfertiger weist eine Trittvorrichtung zum Bereitstellen eines Standplatzes für eine Person auf.

Vorteilhafterweise sind an dem Bedienstand Bedienelemente, wie eine Einstelleinrichtutig für einen oder mehrere Arbeitsparameter der Einbaubohle (z.B. Tamperhub, Anstellwinkel, Tamperfrequenz) und/oder andere Parameter des Straßenfertigers (z.B. Einbaugeschwindigkeit) vorgesehen, sodass diese von einer auf der Trittvorrichtung stehenden Bedienperson betätigt werden können.

Erfindungsgemäß weist die Trittvorrichtung einen fest mit dem Chassis oder der Einbaubohle eines Straßenfertigers verbindbaren Stützteil auf. Dabei kann es sich insbesondere um einen sich in einer vertikalen Richtung erstreckenden Träger handeln. Die Verbindung mit dem Chassis oder der Einbaubohle kann z.B. durch eine Schraubverbindung oder durch Schweißen erfolgen. Vorzugsweise ist der Stützteil an einem hinteren Ende des Chassis oder der Einbaubohle anbringbar.

An dem Stützteil kann zumindest ein Bedienelement für Arbeitsparameter des Straßenfertigers und/oder der Einbaubohle vorgesehen oder angebracht sein. Über das zumindest eine Bedienelement ist vorteilhafter Weise der gesamte Betrieb des Straßenfertigers steuerbar.

An dem Stützteil ist ein Trittteil mit einer Trittfläche um eine Hauptschwenkachse schwenkbar befestigt. Der Trittteil ist dabei zwischen einer Nutzposition und einer Transportposition schwenkbar, wobei in der Nutzposition die Trittfläche im Wesentlichen horizontal ausgerichtet ist, sodass eine Bedienperson darauf stehen kann. Insbesondere kann in der Nutzposition die Trittfläche parallel zu einer horizontalen Ebene sein oder gegenüber einer horizontalen Ebene um maximal bis zu 2°, bis zu 5°, bis zu 8°, bis zu 10° oder bis zu 20° verschwenkt sein.

Um die Arbeitssicherheit zu erhöhen, ist eine Verriegelungseinrichtung mit einem Eingriffselement vorgesehen. Das Eingriffselement ist erfindungsgemäß dazu konfiguriert, in einen die Position des Trittteils sichernden Eingriff mit dem Trittteil zu kommen, wenn sich der Trittteil in der Nutzposition befindet. Durch den Eingriff wird verhindert, dass der Trittteil aus der Nutzposition schwenkt, insbesondere dass der Trittteil aus der Nutzposition zumindest teilweise in die Transportposition schwenkt. Wenn ein Straßenfertiger mit dem erfindungsgemäßen Bedienstand rückwärts mit einem Hindernis kollidiert, kann so der Trittteil nicht verschwenken und die Bedienperson nicht eingeklemmt werden.

Erfindungsgemäß ist das Eingriffselement der Verriegelungseinrichtung zu einer Bewegung hin zum Eingriff mit dem Trittteil vorbelastet, bzw. vorgespannt. Das Eingriffselement kann durch die Vorbelastung automatisch, d.h. ohne Zutun eines Benutzers, in Eingriff mit dem Trittteil kommen, wenn das Trittteil am Ende einer Schwenkbewegung von der Transportposition in die Nutzposition die Nutzposition erreicht.

Durch die Vorbelastung des Eingriffselements kann ein Arbeitsschritt zum manuellen Sichern des Trittteils in der Nutzposition entfallen. Dadurch wird die Arbeitssicherheit weiter erhöht, da das Sichern des Trittteils nicht versehentlich vergessen werden kann.

Die Verriegelungseinrichtung ist vorteilhafterweise an dem Stützteil befestigt. Insbesondere kann die Verriegelungseinrichtung derart an dem Stützteil befestigt sein, dass sie nur mit Hilfe eines geeigneten Werkzeugs davon entfernt werden kann. Dadurch ist die Verriegelungseinrichtung unverlierbar.

Vorzugsweise ist die Trittfläche in der Transportposition im Wesentlichen vertikal ausgerichtet. Die Trittfläche kann beispielsweise in der Transportposition parallel zu einer in Fahrtrichtung des Straßenfertigers hinten gelegenen Fläche der Einbaubohle sein und insbesondere an dieser anliegen. Dadurch ist die Trittfläche in der Transportposition besonders platzsparend untergebracht.

Bei der Verschwenkung von der Transportposition in die Nutzposition kann die Trittfläche um einen Schwenkwinkel von ca. 90° verschwenkt werden.

Die Verschwenkbarkeit des Trittteils kann dadurch gewährleistet sein, dass der Trittteil schwenkbar an einem fest mit dem Stützteil verbundenen Bolzen gelagert ist. Alternativ kann beispielsweise ein fest mit dem Trittteil verbundener Bolzen drehbar in dem Stützteil gelagert sein. Insbesondere kann eine fest mit der Trittfläche verbundene Schwenkplatte fest mit dem Bolzen verbunden oder zur langernden Aufnahme des Bolzens ausgebildet sein.

Der Eingriff des Eingriffselements mit dem Trittteil kann durch einen Kontakt zwischen einer Verriegelungs-Eingriffsfläche des Eingriffselements und einer Trittteil-Eingriffsfläche des Trittteils gegeben sein. Dabei kann der Kontakt ein Schwenken des Trittteils aus der Nutzposition blockieren. In dem Eingriffszustand können die Verriegelungs- und die Trittteil-Eingriffsfläche parallel zueinander ausgerichtet sein.

Der Trittteil, insbesondere dessen Schwenkplatte, kann eine Kurvenfläche und eine daran anschließende Vertiefung aufweisen, bei Vorhandensein der Schwenkplatte insbesondere entlang des Außenumfangs der Schwenkplatte. Durch die Vorbelastung des Eingriffselements kann bei einem Schwenken des Trittteils von der Transportposition in die Nutzposition das Eingriffselement schleifend mit der Kurvenfläche in Kontakt sein. Bei Erreichen der Nutzposition kann das Eingriffselement durch die Vorbelastung zumindest teilweise in die an die Kurvenfläche anschließende Vertiefung bewegt werden, um den Eingriff zu gewährleisten.

Als besonders vorteilhaft wird eine Ausführungsform angesehen, in der das Eingriffselement schwenkbar an dem Stützteil befestigt ist. Insbesondere kann das Eingriffselement an einer schwenkbar an dem Stützteil gelagerten Sicherungsachse der Verriegelungseinrichtung befestigt sein. Bei der Sicherungsachse kann es sich um ein stangenförmiges Element handeln. Vorzugsweise ist die Sicherungsachse zu der Hauptschwenkachse parallel.

Die Vorbelastung des Eingriffselements zu der Bewegung hin zu dem Eingriff mit dem Trittteil lässt sich besonders einfach durch eine Feder realisieren, die das Eingriffselement zu der Bewegung hin zum Eingriff mit dem Trittteil vorspannt.

In Ausführungsformen mit dem schwenkbaren Eingriffselement kann dazu eine Torsionsfeder verwendet werden, die die Sicherungsachse zu einer entsprechenden Drehung vorspannt. Der Einsatz einer Feder erlaubt es, die Stärke der Vorbelastung des Eingriffselements durch eine geeignete Auswahl der Feder festzulegen.

Alternativ zu dem Einsatz einer Feder oder auch zusätzlich dazu kann an der Sicherungsachse zumindest ein exzentrisches Gewicht vorgesehen sein. Durch dieses exzentrische Gewicht kann die Sicherungsachse zu einer Drehung vorbelastet sein. Das an der Sicherungsachse vorgesehene Eingriffselement kann durch die Gewichtskraft des exzentrischen Gewichts zu der Bewegung, insbesondere einer Drehung, hin zum Eingriff mit dem Trittteil vorbelastet sein. Das exzentrische Gewicht kann an einer dem Trittteil zugewandten Seite der Sicherungsachse vorgesehen sein. Vorteilhafterweise ist das exzentrische Gewicht einstückig mit der Sicherungsachse ausgebildet.

Um den Trittteil von der Nutzposition in die Transportposition schwenken zu können, muss das Eingriffselement entgegen der Vorbelastung außer Eingriff mit dem Trittteil gebracht werden. Dies kann je nach Ausbildung der Verriegelungseinrichtung auf verschiedene Arten erfolgen. Beispielsweise kann an der Sicherungsachse ein Griff angebracht sein, um einem Benutzer zu erlauben, das Eingriffselement gegen die Vorbelastung aus dem Eingriff zu lösen, insbesondere durch Drehen der Sicherungsachse. Durch das Ausbilden des oben beschriebenen zumindest einen exzentrischen Gewichts in einer geeigneten Form kann dieses auch als Griff verwendet werden, sodass das separate Ausbilden eines Griffs überflüssig wird.

Gemäß einer vorteilhaften Ausführungsform ist an dem Stützteil ein Stopper vorgesehen, der durch einen Eingriff mit dem Eingriffselement eine Drehung der Sicherungsachse entgegen der Vorbelastungsrichtung begrenzt. Der Stopper kann insbesondere so positioniert sein, dass er verhindert, dass durch eine Drehung der Sicherungsachse das zumindest eine exzentrische Gewicht soweit gedreht wird, dass es von dem Trittteil abgewandt ist oder genau senkrecht steht und so das auf die Sicherungsachse durch das zumindest eine exzentrische Gewicht ausgeübte Drehmoment seine Richtung ändert.

Die Erfindung betrifft ebenfalls einen Straßenfertiger mit einem Bedienstand gemäß den oben beschriebenen Ausführungsformen. Dabei kann der Bedienstand in Fahrtrichtung am hinteren Ende des Straßenfertigers positioniert sein und der Stützteil fest mit dem Chassis oder der Einbaubohle verbunden sein, insbesondere durch eine Schraub- oder Schweißverbindung.

Im Folgenden soll die Erfindung anhand der Figuren näher erläutert werden. Dabei zeigt:
- Figur 1:: eine schematische Darstellung eines Straßenfertigers mit einem erfindungsgemäßen Bedienstand, der eine Trittvorrichtung zum Bereitstellen eines Standplatzes für eine Person aufweist, wobei der Stützteil an dem Chassis des Straßenfertigers befestigt ist,
- Figur 2:: eine schematische Darstellung eines Straßenfertigers mit einem erfindungsgemäßen Bedienstand, wobei der Stützteil an der Einbaubohle des Straßenfertigers befestigt ist,
- Figur 3:: eine schematische perspektivische Ansicht eines Ausschnitts einer Trittvorrichtung eines erfindungsgemäßen Bedienstands in der Nutzposition,
- Figur 4:: eine schematische Seitenansicht eines Ausschnitts einer Trittvorrichtung eines erfindungsgemäßen Bedienstands in der Nutzposition und
- Figur 5:: eine schematische Seitenansicht eines Ausschnitts einer Trittvorrichtung eines erfindungsgemäßen Bedienstands in der Transportposition.

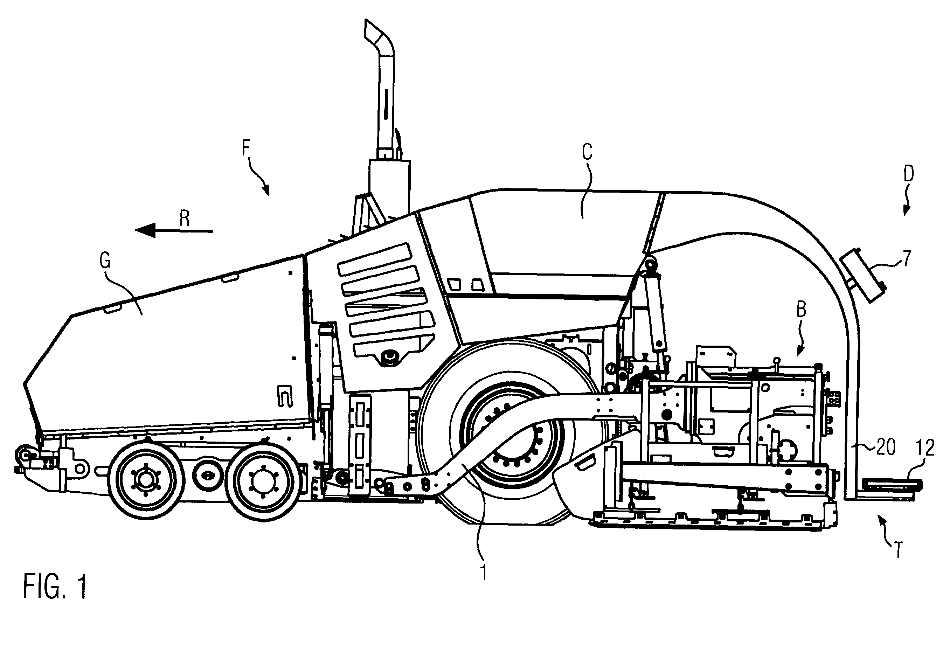

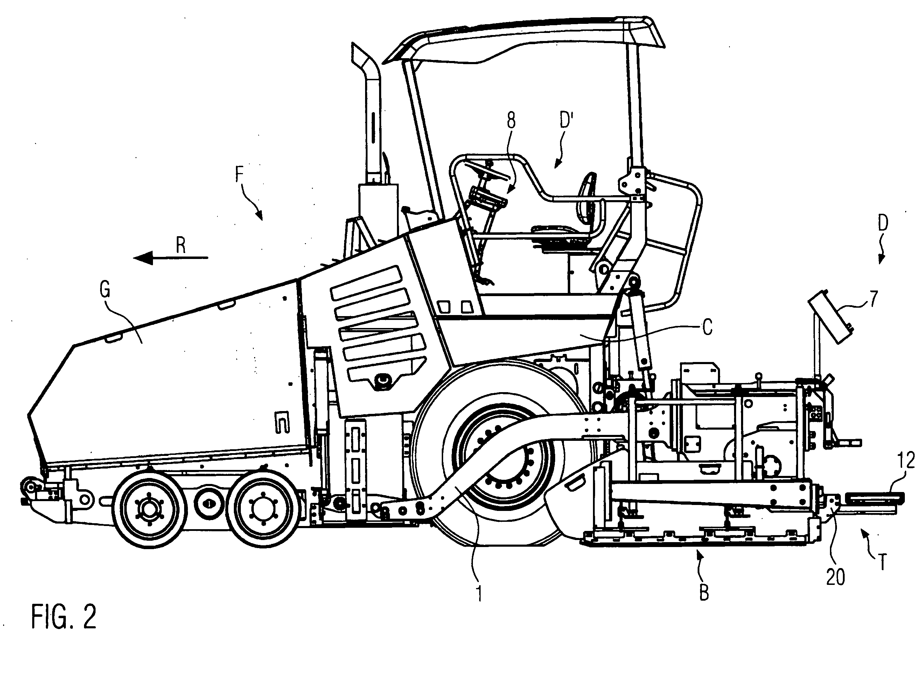

Die Figuren 1 und 2 zeigen eine an seitlichen Zugholmen 1 geschleppte Einbaubohle B eines Straßenfertigers F. In dem Gutbunker G des Straßenfertigers F vorhandenes Einbaumaterial, beispielsweise bituminöses Einbaumaterial, wird in Einbaurichtung R vor der Einbaubohle B vorgelegt, dann mit einer nicht gezeigten Verteilerschnecke in einer Querrichtung auf dem Planum verteilt und durch die Einbaubohle B verdichtet und geglättet.

Figur 1 zeigt einen an dem Chassis C des Straßenfertigers F angebrachten Bedienstand D. Der Bedienstand D umfasst die schwenkbare Trittvorrichtung T mit einer Trittfläche 12, die den Standplatz für eine Bedienperson bereitstellt. In der in Figur 1 gezeigten vorteilhaften Ausbildung umfasst der Bedienstand D zudem zumindest ein Bedienelement 7 mit Einstelleinrichtungen zum Steuern der Funktionen des Straßenfertigers F und/oder der Einbaubohle B. Bei dem Straßenfertiger F aus Figur 1 ist kein zusätzlicher Bedienstand vorgesehen, so dass alle Funktionen des Straßenfertigers F über das zumindest eine Bedienelement 7 gesteuert werden können. Dies ist insbesondere bei kleinen Straßenfertigern F vorteilhaft.

Figur 2 zeigt einen Straßenfertiger F, bei dem der erfindungsgemäße Bedienstand D mit der Einbaubohle B verbunden ist. In der gezeigten Ausführungsform ist der Bedienstand D als Nebenbedienstand ausgelegt. Das heißt, es ist zusätzlich zu dem Bedienstand D mit dem zumindest einen Bedienelement 7 ein weiterer Bedienstand D' als Hauptbedienstand mit weiteren Bedienelementen 8 vorgesehen, hier auf einer Bedienplattform des Straßenfertigers F.

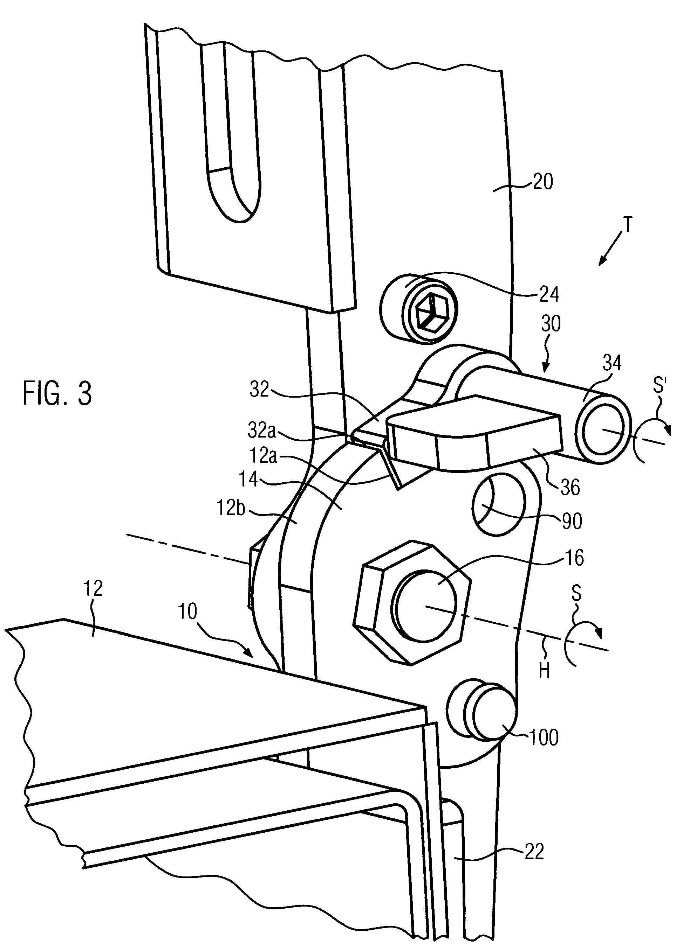

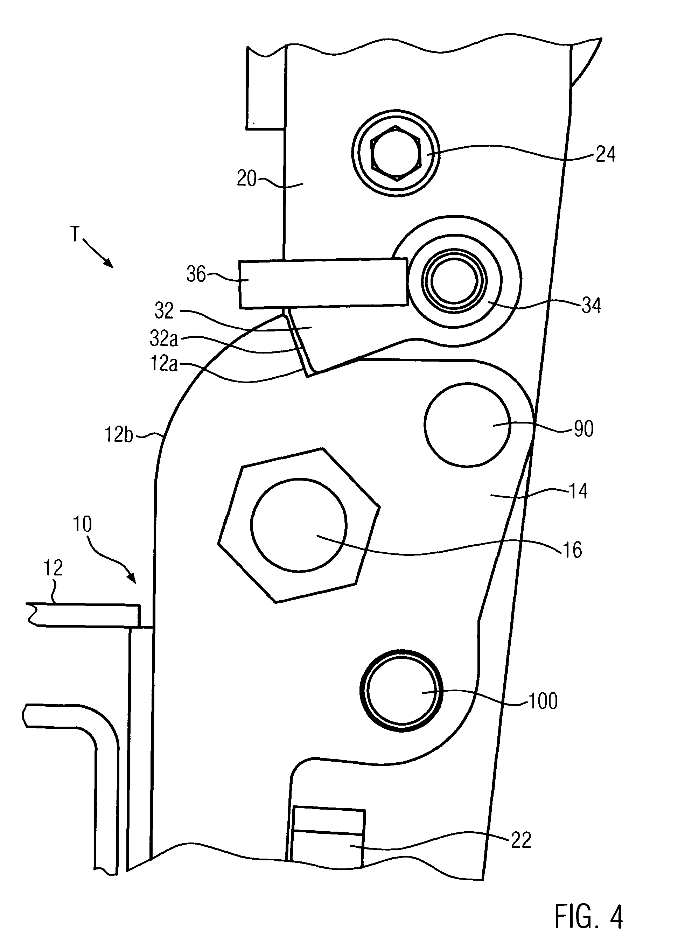

Die Figuren 3 und 4 illustrieren die Trittvorrichtung T eines erfindungsgemäßen Bedienstands D mit dem fest mit dem Chassis C oder der Einbaubohle B des Straßenfertigers F verbindbaren Stützteil 20. Bei dem Stützteil 20 handelt es sich in der hier gezeigten Ausführungsform um eine sich vertikal erstreckende Strebe.

Ein Trittteil 10 der Trittvorrichtung T umfasst eine Trittfläche 12, die in den Figuren 3 und 4 horizontal ausgerichtet ist, und eine damit fest verbundene Schwenkplatte 14. Die Trittfläche 12 kann ein Trittblech umfassen oder von einem Trittblech gebildet sein.

Das Vorsehen der Schwenkplatte 14 ist vorteilhaft, aber nicht zwingend notwendig, da die Schwenkbarkeit des Trittteils 10 auch anderweitig gewährleistet werden kann. Die Schwenkplatte 14 ist über einen Bolzen 16 um die Hauptschwenkachse H schwenkbar mit dem Stützteil 20 verbunden. Die Hauptschwenkachse H erstreckt sich dabei vorzugsweise in einer horizontalen Ebene und senkrecht zur Einbaurichtung R. Durch ein Verschwenken um die Hauptschwenkachse H auf die Einbaubohle B zu (in Schwenkrichtung S) lässt sich der Trittteil 10 in eine vertikale Transportposition bringen. Der Bolzen 16 könnte in einer Ausführungsform ohne Schwenkplatte 14 mit der Trittfläche 12 direkt verbunden oder an/in dieser schwenkbar gelagert sein.

Ein an dem Stützteil 20 vorgesehener Anschlag 22, vorzugsweise unterhalb der Hauptschwenkachse H oder der Schwenkplatte 14, verhindert durch Kontakt mit dem Trittteil 10 ein über die horizontale Position hinausgehendes Verschwenken der Trittfläche 12 nach unten entgegen der Schwenkrichtung S.

Der Trittteil 10 wird durch eine Verriegelungseinrichtung 30 in der in den Figuren 3 und 4 gezeigten Nutzposition gehalten. Die Verriegelungseinrichtung 30 weist dazu ein Eingriffselement 32 auf, das durch seinen Eingriff in den Trittteil 10, insbesondere in dessen Schwenkplatte 14, ein Verschwenken des Trittteils 10 verhindert. Dabei stehen sich eine Verriegelungs-Eingriffsfläche 32a des Eingriffselements 32 und eine Trittteil-Eingriffsfläche 12a des Trittteils 10, insbesondere der Schwenkplatte 14, gegenüber, sodass ein Kontakt dieser Flächen 12a, 32a ein Schwenken des Trittteils 10 aus der Nutzposition in Schwenkrichtung S blockiert.

Die in Figur 3 gezeigte Verriegelungseinrichtung 30 weist eine Sicherungsachse 34 auf, die schwenkbar an dem Stützteil 20 gelagert ist (Schwenkrichtung S'). Vorteilhafterweise ist die Sicherungsachse 34 parallel zu der Hauptschwenkachse H. Insbesondere verläuft die Sicherungsachse 34 in einer horizontalen Ebene und steht senkrecht zur Einbaurichtung R. Die Sicherungsachse 34 kann als Stange oder Rohr ausgebildet sein.

Das Eingriffselement 32 ist an der Sicherungsachse 34 vorzugsweise fest angebracht. Durch eine Drehung der Sicherungsachse 34 kann das Eingriffselement 32 damit in der Nutzposition des Trittteils 10 in oder aus dem sperrenden Eingriff mit dem Trittteil 10 gebracht werden.

An der von der Einbaubohle B abgewandten und dem Trittteil 10 zugewandten Seite der Sicherungsachse 34 ist ein exzentrisches Gewicht 36 vorgesehen. Durch dessen Gewichtskraft wird die Sicherungsachse 34 entgegen der Schwenkrichtung S' vorbelastet. Dadurch ist das Eingriffselement 32 zu einer Bewegung hin zum Eingriff mit dem Trittteil 10, insbesondere mit der Schwenkplatte 14, vorbelastet. Die Vorbelastung erfolgt hier also durch Gravitation, wobei alternativ oder zusätzlich z.B. eine Vorbelastung durch eine Federspannung denkbar wäre. Bei Erreichen der Nutzposition gerät das Eingriffselement 32 durch seine Vorbelastung automatisch in den in den Figuren 3 und 4 gezeigten sichernden Eingriff mit dem Trittteil 10.

Soll nun der Trittteil 10 aus der in Figuren 3 und 4 gezeigten Nutzposition um die Hauptschwenkachse H in Schwenkrichtung S zu der Transportposition geschwenkt werden, kann das Eingriffselement 32 durch eine Drehung, insbesondere eine manuelle Drehung, der Sicherungsachse 34 entgegen der Vorbelastung in Schwenkrichtung S' aus dem Eingriff gedreht werden. Dadurch wird die Schwenkbewegung des Trittteils 10 in Schwenkrichtung S der Hauptschwenkachse H freigegeben.

Wenn das exzentrische Gewicht 36 in einer geeigneten Form ausgebildet ist, kann es von einem Benutzer als Griff zum Drehen der Sicherungsachse 34 für das Freigeben des Trittteils 10 verwendet werden. Wie in Figur 3 gezeigt, kann das exzentrische Gewicht 36 dazu als von der Sicherungsachse 34 vorstehende Platte ausgebildet sein. Alternativ ist die Ausbildung des exzentrischen Gewichts 36 als Stange oder Ausbuchtung oder in jeder anderen geeigneten Form denkbar. Selbstverständlich können auch mehrere exzentrische Gewichte 36 an der Sicherungsachse 34 vorgesehen sein.

Wie anhand der Figuren 3 und 4 leicht ersichtlich, würde sich die Richtung der Vorbelastung der Sicherungsachse 34 durch das exzentrische Gewicht 36 umkehren, wenn das exzentrische Gewicht 36 in Schwenkrichtung S' über eine vertikale Position hinaus geschwenkt würde. Um dies zu verhindern, ist an dem Stützteil 20 ein Stopper 24 vorgesehen, der eine Bewegung des Eingriffselements 32 in Schwenkrichtung S' über eine bestimmte Position hinaus begrenzt. Diese Position ist so gewählt, dass der Schwerpunkt des exzentrischen Gewichts 36 nicht soweit in Schwenkrichtung S' geschwenkt werden kann, dass er über der Sicherungsachse 34 liegt.

Es erschließt sich, dass der in den Figuren gezeigte Stützteil 20 vorzugsweise an einer äußeren Region des Chassis C oder der Einbaubohle B vorgesehen ist (z.B. in Einbaurichtung R links in Figur 1 oder 2). Selbstverständlich kann der Trittteil 10 an der in Querrichtung gegenüberliegenden Seite des Bedienstands D an einem zweiten Stützteil 20 in gleicher oder ähnlicher Weise um die Hauptschwenkachse H schwenkbar befestigt sein. Vorzugsweise ist die Sicherungsachse 34 an der gegenüberliegenden Seite in einem zweiten Stützteil drehbar gelagert. Es kann auch ein zweites Eingriffselement sowie eine zweite Schwenkplatte in analoger Weise vorgesehen sein. Dies ist allerdings nicht notwendigerweise der Fall.

Figur 4 ist eine Seitenansicht der erfindungsgemäßen Vorrichtung in der in Figur 3 gezeigten Nutzposition, wobei der Betrachter entlang der Hauptschwenkachse H blickt. Aus dieser Darstellung ist die in Wesentlichen horizontale Position der Trittfläche 12 in der Nutzposition sowie die im Wesentlichen vertikale Ausrichtung des Stützteils 20 ersichtlich. Es wäre allerdings auch denkbar, dass der Stützteil 20 nicht vertikal ausgerichtet ist.

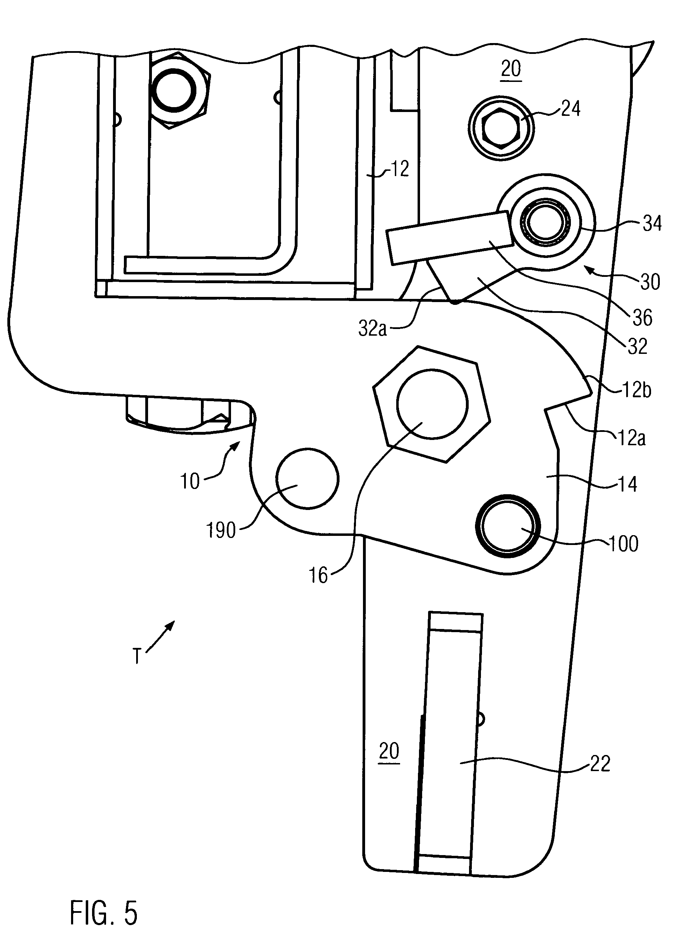

Die schematische Seitenansicht von Figur 5 zeigt den Trittteil 10 des erfindungsgemäßen Bedienstandes D in der Transportposition. In der gezeigten Ausführungsform ist die Trittfläche 12 in der Transportposition vertikal ausgerichtet. In der Transportposition ist das Eingriffselement 32 nicht in dem sichernden Eingriff mit dem Trittteil 10.

Dennoch ist das Eingriffselement 32 der Verriegelungseinrichtung 30 auch in dieser Position zu einer Bewegung hin zum Eingriff mit dem Trittteil 10 vorbelastet, in der gezeigten Ausführungsform durch die Gewichtskraft des exzentrischen Gewichts 36.

Der Trittteil 10, insbesondere dessen optional vorgesehene Schwenkplatte 14, weist vorteilhafterweise eine Kurvenfläche 12b und eine daran anschließende Vertiefung auf. Die Vorbelastung durch das exzentrische Gewicht 36 bringt das Eingriffselement 32 in Kontakt mit der Kurvenfläche 12b des Trittteils 10. Dieser Kontakt ist sowohl in der Transportposition als auch in den Übergangspositionen beim Verschwenken des Trittteils 10 zwischen der Transportposition und der Nutzposition gegeben.

Wie anhand von Figur 5 leicht vorstellbar, ist bei einem Schwenken des Trittteils 10 von der Transportposition in die Nutzposition das Eingriffselement 32 schleifend mit der Kurvenfläche 12b in Kontakt. Bei Erreichen der Nutzposition wird das Eingriffselement 32 durch die Vorbelastung in die sich an die Kurvenfläche 12b anschließende Vertiefung der Schwenkplatte 14 bewegt. Dadurch wird die in den Figuren 3 und 4 gezeigte Position mit dem sichernden Eingriff erreicht.

Um den Trittteil 10 in der Transportposition ebenfalls zu sichern, sind verschiedene Möglichkeiten denkbar. Zum Einen kann ein zweites Eingriffselement vorgesehen werden, das in der Transportposition in den Trittteil 10 eingreift. Auch hier wäre ein Vorbelasten des entsprechenden Eingriffselements zu einer Bewegung hin zu einem Eingriff mit dem Trittteil 10 denkbar. Ein solches zweites Eingriffselement könnte an einer anderen Stelle der Schwenkplatte 14 als das erste Eingriffselement 32 eingreifen und könnte beispielsweise an dem Stützteil 20 unterhalb der Schwenkplatte 14 angebracht sein und mit einer Feder vorbelastet bzw. vorgespannt sein.

Nachdem es weniger wahrscheinlich ist, dass ein Sichern des Trittteils 10 in der Transportposition vergessen wird, ist es allerdings nicht unbedingt notwendig, dass dieses Sichern ebenfalls automatisch erfolgt. Daher kann hierfür auch eine manuelle Sicherung verwendet werden. Wie in den Figuren 3 und 4 gezeigt, weist die Schwenkplatte 12 des Trittteils 10 eine Öffnung 90 auf. In dem Stützteil 20 ist eine dazu komplementäre Öffnung derart angeordnet, dass die beiden Öffnungen 90 in der Transportposition übereinanderliegen. Durch Durchstecken eines Bolzens 100 durch die Öffnung 90 in der Schwenkplatte 14 und die komplementäre Öffnung in dem Stützteil 20 lässt sich der Trittteil 10 gegen ein Verschwenken aus der Transportposition sichern. Vorteilhafterweise weist der hierzu verwendete Bolzen 100 einen gebogenen Teil auf, der als Griff verwendet werden kann und ein Durchrutschen des Bolzens 100 durch beide Öffnungen 90 verhindert. Auf der dem gebogenen Teil gegenüberliegenden Seite der Öffnungen 90 kann der Bolzen 100 mit einem Splint gesichert werden.

Die Figuren 3 bis 5 zeigen des Weiteren eine zweite Öffnung 190 in der Schwenkplatte 14. Diese ist in der Nutzposition über der komplementären Öffnung des Stützteils 20 angeordnet. Wie in Figur 3 und 4 gezeigt, kann damit der Trittteil 10 auch in der Nutzposition zusätzlich manuell gesichert werden. Notwendig ist dies allerdings nicht, da der Trittteil 10 bereits durch die Vorbelastung des Eingriffselements 32 zu der Bewegung hin zum Eingriff mit dem Trittteil 10 automatisch gesichert wird, wenn der Trittteil 10 die Nutzposition erreicht.

Das zeitaufwändige und fehleranfällige manuelle Sichern durch einen Bolzen 100 kann bei dem erfindungsgemäßen Bedienstand D also entfallen.

## Patentansprüche

1. Bedienstand (D) für einen Straßenfertiger (F) mit einer Trittvorrichtung (T) zum Bereitstellen eines Standplatzes für eine Person mit:
einem Stützteil (20), das fest mit einem Chassis (C) oder einer Einbaubohle (B) des Straßenfertigers (F) verbindbar ist, und
einem an dem Stützteil (20) um eine Hauptschwenkachse (H) zwischen einer Transportposition und einer Nutzposition schwenkbar befestigten Trittteil (10) mit einer Trittfläche (12), wobei die Trittfläche (12) in der Nutzposition im Wesentlichen horizontal ausgerichtet ist, so dass der Standplatz für die Person bereitgestellt wird,
**gekennzeichnet durch**
eine Verriegelungseinrichtung (30) mit einem Eingriffselement (32), das dazu konfiguriert ist, in einen die Position des Trittteils (10) sichernden Eingriff mit dem Trittteil (10) zu kommen, wenn sich der Trittteil (10) in der Nutzposition befindet,
wobei das Eingriffselement (32) der Verriegelungseinrichtung (30) zu einer Bewegung hin zum Eingriff mit dem Trittteil (10) vorbelastet ist.

2. Bedienstand nach Anspruch 1, **dadurch gekennzeichnet, dass** das Eingriffselement (32) durch die Vorbelastung automatisch in den Eingriff mit dem Trittteil (10) kommt, wenn das Trittteil (10) die Nutzposition erreicht.

3. Bedienstand nach Anspruch 1 oder 2, **dadurch gekennzeichnet, dass** die Verriegelungseinrichtung (30) an dem Stützteil (20) befestigt ist.

4. Bedienstand nach einem der vorhergehenden Ansprüche, **dadurch gekennzeichnet, dass** die Trittfläche (12) in der Transportposition im Wesentlichen vertikal ausgerichtet ist.

5. Bedienstand nach einem der vorhergehenden Ansprüche, **dadurch gekennzeichnet, dass** das Eingriffselement (32) eine Verriegelungs-Eingriffsfläche (32a) aufweist und der Trittteil (10) eine Trittteil-Eingriffsfläche (12a) aufweist, wobei in dem Eingriff ein Kontakt zwischen der Verriegelungs-Eingriffsfläche (32a) und der Trittteil-Eingriffsfläche (12a) ein Schwenken des Trittteils (10) aus der Nutzposition blockiert.

6. Bedienstand nach einem der vorhergehenden Ansprüche, **dadurch gekennzeichnet, dass** das der Trittteil (10) eine Kurvenfläche (12b) und eine daran anschließende Vertiefung aufweist, wobei die Vorbelastung des Eingriffselements (32) der Verriegelungseinrichtung (30) derart beschaffen ist, dass bei einem Schwenken des Trittteils (10) von der Transportposition in die Nutzposition das Eingriffselement (32) schleifend mit der Kurvenfläche (12b) in Kontakt ist und bei Erreichen der Nutzposition das Eingriffselement (32) zumindest teilweise in die Vertiefung bewegt wird.

7. Bedienstand nach einem der vorhergehenden Ansprüche, **gekennzeichnet durch** eine Feder, die das Eingriffselement (10) zu der Bewegung hin zum Eingriff mit dem Trittteil (10) vorbelastet.

8. Bedienstand nach einem der vorhergehenden Ansprüche, **dadurch gekennzeichnet, dass** das Eingriffselement (32) an einer schwenkbar an dem Stützteil (20) gelagerten Sicherungsachse (34) der Verriegelungseinrichtung (30) befestigt ist.

9. Bedienstand nach Anspruch 8, **dadurch gekennzeichnet, dass** die Sicherungsachse (34) zu der Hauptschwenkachse (H) parallel ist.

10. Bedienstand nach Anspruch 8 oder 9, **dadurch gekennzeichnet, dass** an der Sicherungsachse (34) zumindest ein exzentrisches Gewicht (36) vorgesehen ist, wobei das Eingriffselement (32) durch die Gewichtskraft des zumindest einen exzentrischen Gewichts (36) zu der Bewegung hin zum Eingriff mit dem Trittteil (10) vorbelastet ist.

11. Bedienstand nach Anspruch 10, **dadurch gekennzeichnet, dass** das zumindest eine exzentrische Gewicht (36) als Griff ausgebildet ist, der ein Schwenken der Sicherungsachse (34) durch einen Benutzer erlaubt, so dass das Eingriffselement (32) gegen die Vorbelastung aus dem Eingriff gelöst werden kann.

12. Bedienstand nach einem der Ansprüche 8 bis 11, **dadurch gekennzeichnet, dass** ein Stopper (24) an dem Stützteil (20) vorgesehen ist, wobei der Stopper (24) durch einen Eingriff mit dem Eingriffselement (32) eine Drehung der Sicherungsachse (34) entgegen der Vorbelastungsrichtung begrenzt.

13. Straßenfertiger (F) mit einem in Fahrtrichtung (R) des Straßenfertigers (F) hinten gelegenen Bedienstand (D) nach einem der vorhergehenden Ansprüche, wobei der Stützteil (20) fest mit dem Chassis (C) oder der Einbaubohle (B) des Straßenfertigers (F) verbunden ist.

## Claims

1. Control station (D) for a road paver (F) with a step device (T) for providing a standing area for a person with:
a support part (20) that is adapted to be firmly linked to a chassis (C) or a paving screed (B) of the road paver (F), and
a step part (10) with a step surface (12), the step part (10) being attached to the support part (20) tiltably about a main tilt axis (H) between a transport position and an operating position, wherein the step surface (12) is aligned generally horizontally in the operating position so that the standing area for the person is provided,
**characterized by**
a locking unit (30) with an engagement element (32) that is configured to come into engagement with the step part (10) when the step part (10) is in the operating position, the engagement securing the position of the step part (10),
wherein the engagement element (32) of the locking unit (30) is pre-loaded for a movement into the engagement with the step part (10).

2. Control station according to Claim 1, **characterized in that** the engagement element (32) automatically comes into the engagement with the step part (10) through the preload when the step part (10) reaches the operating position.

3. Control station according to Claim 1 or 2, **characterized in that** the locking unit (30) is attached at the support part (20).

4. Control station according to one of the preceding claims, **characterized in that** the step surface (12) is aligned generally vertically in the transport position.

5. Control station according to one of the preceding claims, **characterized in that** the engagement element (32) has a locking engagement surface (32a) and that the step part (10) has a step part engagement surface (12a), wherein during engagement, a contact between the locking engagement surface (32a) and the step part engagement surface (12a) blocks a tilting movement of the step part (10) out of the operating position.

6. Control station according to one of the preceding claims, **characterized in that** the step part (10) has a curved surface (12b) and a recess adjacent to the latter, wherein the pre-load of the engagement element (32) of the locking unit (30) is configured such that the engagement element (32) is in grinding contact with the curved surface (12b) during a tilting movement of the step part (10) from the transport position to the operating position and that the engagement element (32) is at least partially moved into the recess when the operating position is reached.

7. Control station according to one of the preceding claims, **characterized by** a spring that pre-loads the engagement element (32) for the movement into the engagement with the step part (10).

8. Control station according to one of the preceding claims, **characterized in that** the engagement element (32) is attached at a securing axis (34) of the locking unit (30) that is tiltably attached to the support part (20).

9. Control station according to Claim 8, **characterized in that** the securing axis (34) is situated in parallel to the main tilting axis (H).

10. Control station according to Claim 8 or 9, **characterized in that** at least one eccentric weight (36) is provided at the securing axis (34), wherein the engagement element (32) is pre-loaded by the weight force of the at least one eccentric weight (36) for the movement into the engagement with the step part (10).

11. Control station according to Claim 10, **characterized in that** the at least one eccentric weight (36) is designed as a handle that enables a user to tilt the securing axis (34) so that the engagement element (32) can be removed from the engagement against the pre-load.

12. Control station according to one of the Claims 8 to 11, **characterized in that** a stopper (24) is installed at the support part (20), wherein the stopper (24) limits a rotation of the securing axis (34) against the pre-load direction through an engagement with the engagement element (32).

13. Road paver (F) with a control station (D) according to one of the preceding claims installed at the rear with respect to the direction of travel (R), wherein the support part (20) is firmly linked to the chassis (C) or the paving screed (B) of the road paver (F).

## Revendications

1. Poste de commande (D) pour un finisseur de route (F) avec une passerelle (T) fournissant un emplacement debout pour une personne, comprenant :
une partie de support (20), qui peut être reliée de manière fixe à un châssis (C) ou une table de finisseur (B) du finisseur de route (F),
une partie de passerelle (10) avec une surface de marche (12), qui est fixée à la partie de support (20) de manière à pouvoir pivoter autour d'un axe de pivotement principal (H), entre une position de transport et une position d'utilisation, la surface de marche (12) étant orientée sensiblement dans une direction horizontale dans la position d'utilisation, de manière à fournir ainsi l'emplacement debout pour ladite personne,
**caractérisé par**
un dispositif de verrouillage (30) avec un élément d'arrêt (32), qui est configuré pour venir en prise d'arrêt avec la partie de passerelle (10) pour assurer l'arrêt sécurisé de la partie de passerelle (10) lorsque la partie de passerelle (10) se trouve dans la position d'utilisation,
l'élément d'arrêt (32) du dispositif de verrouillage (30) étant pré-chargé dans le sens d'un mouvement vers la venue en prise avec la partie de passerelle (10).

2. Poste de commande selon la revendication 1, **caractérisé en ce que** l'élément d'arrêt (32), sous l'effet de la pré-charge, vient automatiquement en prise avec la partie de passerelle (10), lorsque la partie de passerelle (10) atteint la position d'utilisation.

3. Poste de commande selon la revendication 1 ou la revendication 2, **caractérisé en ce que** le dispositif de verrouillage (30) est fixé à la partie de support (20).

4. Poste de commande selon l'une des revendications précédentes, **caractérisé en ce que** la surface de marche (12) est orientée sensiblement à la verticale dans la position de transport.

5. Poste de commande selon l'une des revendications précédentes, **caractérisé en ce que** l'élément d'arrêt (32) présente une surface de prise de verrouillage (32a), et la partie de passerelle (10) une surface de prise de partie de passerelle (12a), un contact entre la surface de prise de verrouillage (32a) et la surface de prise de partie de passerelle (12a) lorsqu'elles sont en prise, bloquant un pivotement de la partie de passerelle (10) hors de la position d'utilisation.

6. Poste de commande selon l'une des revendications précédentes, **caractérisé en ce que** la partie de passerelle (10) présente une surface courbe (12b) et un creux qui s'y raccorde, la pré-charge de l'élément d'arrêt (32) du dispositif de verrouillage (30) étant conçue de manière telle, que lors d'un pivotement de la partie de passerelle (10) de la position de transport à la position d'utilisation, l'élément d'arrêt (32) soit en contact glissant avec la surface courbe (2b), et que lorsque la position d'utilisation est atteinte, l'élément d'arrêt (32) soit déplacé au moins partiellement dans ledit creux.

7. Poste de commande selon l'une des revendications précédentes, **caractérisé par** un ressort qui pré-charge l'élément d'arrêt (32) pour son mouvement de venue en prise avec la partie de passerelle (10).

8. Poste de commande selon l'une des revendications précédentes, **caractérisé en ce que** l'élément d'arrêt (32) est fixé sur un axe d'arrêt de sécurité (34) du dispositif de verrouillage (30) monté pivotant sur la partie de support (20).

9. Poste de commande selon la revendication 8, **caractérisé en ce que** l'axe d'arrêt de sécurité (34) est parallèle à l'axe de pivotement principal (H).

10. Poste de commande selon la revendication 8 ou la revendication 9, **caractérisé en ce que** sur l'axe d'arrêt de sécurité (34) est prévu au moins un poids excentrique (36), l'élément d'arrêt (32) étant pré-chargé par la force de gravité dudit au moins un poids excentrique (36) dans la direction du mouvement conduisant à la venue en prise avec la partie de passerelle (10).

11. Poste de commande selon la revendication 10, **caractérisé en ce que** ledit au moins un poids excentrique (36) est réalisé sous la forme d'une poignée, qui permet un pivotement de l'axe d'arrêt de de sécurité (34) par un utilisateur, de sorte que l'élément d'arrêt (32) peut être libéré de sa prise, à l'encontre de la pré-charge.

12. Poste de commande selon l'une des revendications 8 à 11, **caractérisé en ce qu'**une butée (24) est prévue sur la partie de support (20), la butée (24) limitant, par une venue en prise avec l'élément d'arrêt (32), une rotation de l'axe d'arrêt de sécurité (34) à l'encontre de la direction de pré-charge.

13. Finisseur de route (F) comportant un poste de commande (D) selon l'une des revendications précédentes, qui est situé à l'arrière en se référant au sens de marche (R) du finisseur de route (F), la partie de support (20) étant reliée de manière fixe au châssis (C) ou à la table de finisseur (B) du finisseur de route (F).
